# EUROPEAN PATENT SPECIFICATION

(11) **EP 4 020 297 B1**
(45) Date of publication and mention of the grant of the patent: **25.06.2025**
(21) Application number: 20306681.6
(22) Date of filing: 23.12.2020
(51) Int. Cl.: G06F 21/79, G06F 21/77, G06F 12/02, G06F 12/06, G06F 12/08, G06F 12/14, G06F 21/52, G06F 21/53

(54) **METHOD FOR MANAGING A VOLATILE MEMORY AND JAVA CARD DEVICE**
VERFAHREN ZUR VERWALTUNG EINES FLÜCHTIGEN SPEICHERS UND JAVA-KARTENVORRICHTUNG
PROCÉDÉ DE GESTION D'UNE MÉMOIRE VOLATILE ET DISPOSITIF À CARTE JAVA

(43) Date of publication of application: 29.06.2022
(73) Proprietor: Idemia Identity & Security France, 92400 Courbevoie (FR)
(72) Inventor: KUMAR, Sudhir, 92400 Courbevoie (FR); VISHT, Balwant, 92400 Courbevoie (FR)
(74) Representative: Barreau, Cédric

(56) References cited:
- EP-A2- 2 898 413
- US-A1- 2003 024 993
- US-A1- 2005 246 402
- WON-HO CHOI ET AL: "Efficient execution of application applets based on persistent object caching in Java card system", HYBRID INFORMATION TECHNOLOGY, ACM, 2 PENN PLAZA, SUITE 701 NEW YORK NY 10121-0701 USA, 27 August 2009 (2009-08-27), pages 268 - 272, XP058287204, ISBN: 978-1-60558-662-5, DOI: 10.1145/1644993.1645045
- FARHADI MOZHDEH ET AL: "Chronicle of a Java Card death", JOURNAL OF COMPUTER VIROLOGY AND HACKING TECHNIQUES, SPRINGER PARIS, PARIS, vol. 13, no. 2, 17 May 2016 (2016-05-17), pages 109 - 123, XP036210786, DOI: 10.1007/S11416-016-0276-0

## Description

### Technical Field

The present invention relates generally to the field of memory management and, in particular, to a method for managing a volatile memory and a Java Card device.

### Background

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Java Card technology is widely used in smart cards and similar trusted devices with limited memory and processing capabilities, such as smart buttons, universal serial bus (hereinafter "USB") tokens, and the like.

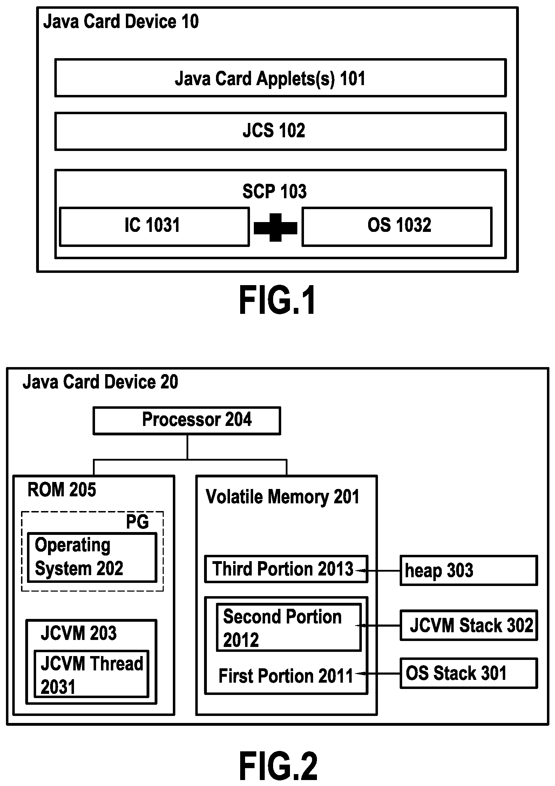

**Figure 1** illustrates an exemplary architecture of a typical Java Card device 10. The Java Card device 10 includes a smart card platform (hereinafter "SCP") 103, a Java card system (hereinafter "JCS") 102 running on top of the SCP 103, and one or more Java Card applets 101 running on top of the JCS 102.

The SCP 103 is a combination of a security integrated circuit (hereinafter "IC") 1031 and an operating system (hereinafter "OS") 1032. The IC includes processing units, security components, input/output (hereinafter "I/O") ports and three kinds of memories: a read-only memory (hereinafter "ROM"), a persistent mutable memory such as an electrically erasable, programmable read only memory (hereinafter "EEPROM") or a flash memory, and a volatile memory such as a random-access memory (hereinafter "RAM"). The RAM can be used to store fields of transient objects. Typically, RAM technology has a much faster write cycle time than the EEPROM.

The JCS 102 implements a Java Card runtime environment (hereinafter "JCRE"). According to the Java Card Platform Runtime Environment Specification, Classic Edition Version 3.1 (hereinafter "JCCRE"), the JCRE includes a Java Card virtual machine (hereinafter "JCVM"), Java Card Application Programming interface (hereinafter "API") classes (including core packages and/or industry-specific extension packages), and support services. The JCS 102 provides a layer between the SCP 103 and the Java Card Applet(s) 101. This layer allows the Java Card Applet(s) 101 written for one SCP 103 enabled with the Java Card technology to run on any other SCP 103 enabled with the Java Card technology.

A JCVM thread is a Java object and a basic unit of processor utilization. According to the JCCRE, the JCVM can support only a single thread of execution, meaning that only one command can be processed by the processing unit of the Java Card device 10 at any time.

A stack is a linear data structure, meaning that its data elements are organized into a sequence, as is well known to the skilled person. In addition, insertion and deletion of data elements can only be done from one end of a stack. Insertion of the data elements is called push, and deletion of the data elements is called pop. The order according to which the data elements are inserted into or removed from the stack may be last-in, first-out, meaning that the first data element pushed onto the stack is the last data element popped off the stack. A stack could be implemented through an array, a vector, an ArrayList, a linked list, or any other linear collection of data elements.

A JCVM stack is allocated to each JCVM thread by the JCVM. The JCVM stack is created in the RAM by the JCVM at the same time as the JCVM thread. The data elements stored in the JCVM stack are JCVM frames. A JCVM frame is created each time a method is invoked by the JCVM thread, is used to store local variables and has an operand stack, which is well known to the skilled person.

Compared with the size of the ROM (e.g., 32-48 kilobytes) or the non-volatile memory (EEPROM or flash, e.g., 16 kilobytes) of the Java Card device 10, the size of the RAM is by nature very limited (e.g., 1.2 kilobytes). Hence the RAM is the most precious resource on the Java Card device 10 from a card software developer's point of view.

However, volatile memory management in existing Java Card devices is not satisfactory and reducing volatile memory usage of Java Card devices is a desirable aim. In particular, there is a need to improve the management of memory space allocation in the volatile memory of a Java Card device (such as the Java Card device 10 illustrated by **figure 1**) running one or more Java Card applets, in order to optimize RAM use and improve global performances of the Java Card device.

The European patent application no. EP2898413 A2 discloses a security module and method for optimum memory utilization. Said security module comprises: a dynamic storage device including a first storage area storing one or more native codes and a second storage area storing one or more Java packages, and a processor being operationally coupled to the dynamic storage device configured to: detect presence of the one or more native codes in the first storage area, form the detected one or more native codes in the first storage area as a part of the second storage area, and manage the one or more native codes like the Java packages in the second storage area.

### Summary (of the invention)

The present invention is as defined by the appended claims.

In a first aspect of the invention, a particular embodiment provides a Java Card device. The Java Card device comprises a volatile memory, an OS, and a JCVM. The JCVM comprises a JCVM thread. The volatile memory comprises a first portion, a second portion within the first portion, and a third portion outside the first portion. The first portion is allocated to an OS stack for supporting execution of native code defined in a language used for programming the OS. The second portion is allocated to a JCVM stack for supporting the JCVM thread. The third portion is allocated to a heap.

According to the particular embodiment of the first aspect, the first portion of the volatile memory may be shared between data elements of both the JCVM stack and the OS stack, without the heap separating the two stacks, meaning that the data elements of the OS stack may make use of all memory spaces of the first portion which are not occupied by any data element of the JCVM stack, and *vice versa,* hence increasing the maximum number of data elements that can be stored in each of the OS stack and the JCVM stack without additional memory areas being allocated to the OS stack or to the JCVM stack. As such, the Java Card device according to the embodiment of the invention may utilize the volatile memory more efficiently.

In a particular embodiment of the first aspect, the volatile memory further comprises a fourth portion outside the third portion and outside the first portion. The fourth portion is allocated to an initialized segment for storing global variables and/or static local variables.

In a particular embodiment of the first aspect, the third portion is positioned within the volatile memory between the first portion and the fourth portion.

In a particular embodiment of the first aspect, the first portion is configured to store the whole OS stack and the whole JCVM stack. A size of the first portion is smaller than a sum of first maximum memory consumption of the OS stack and second maximum memory consumption of the JCVM stack. The first maximum memory consumption of the OS stack is maximum memory consumed by data elements of the OS stack within the volatile memory during execution of the native code. The second maximum memory consumption of the JCVM stack is maximum memory consumed by data elements of the JCVM stack within the volatile memory when the JCVM thread runs.

In a particular embodiment of the first aspect, addresses occupied by data elements in the JCVM stack are configured to grow from a start address of the JCVM stack towards a start address of the OS stack, as the number of the data elements in the JCVM stack increases. Addresses occupied by data elements in the OS stack are configured to grow from the start address of the OS stack towards the start address of the JCVM stack, as the number of the data elements in the OS stack increases.

In a particular embodiment of the first aspect, a location, relative to one end of the first portion, of a boundary between one data element of the JCVM stack and one adjacent data element of the OS stack is configured to vary dynamically as the number of data elements in the JCVM stack and the number of data elements in the OS stack vary.

In a particular embodiment of the first aspect, the first portion and the JCVM stack share a same start address or share a same end address.

In a particular embodiment of the first aspect, a size of the first portion equals a sum of a size of a buffer and third maximum memory consumption. The third maximum memory consumption is cumulated maximum memory consumed by data elements of both the JCVM stack and the OS stack within the volatile memory at one moment.

According to the various embodiments of the present invention, the Java Card device may be (or comprise) a smart card, a terminal, or any other equivalent device with various formats (e.g., a USB key).

In a second aspect of the invention, a particular embodiment provides a method for managing a volatile memory. The method comprises: allocating a first portion of the volatile memory to an OS stack for supporting execution of native code defined in a language used for programming an OS; allocating a second portion of the volatile memory, within the first portion, to a JCVM stack for supporting the JCVM thread; and allocating a third portion of the volatile memory, outside the first portion, to a heap.

In a particular embodiment of the second aspect, the method further comprises: assessing third maximum memory consumption of the JCVM stack and the OS stack; and determining a size of the first portion by adding a size of a buffer to the third maximum memory consumption. The third maximum memory consumption is cumulated maximum memory consumed by data elements of both the JCVM stack and the OS stack within the volatile memory at one moment. The size of the buffer is greater than 0.

In a particular embodiment of the second aspect, allocating the first portion to the OS stack comprises: determining a start address of the OS stack according to a specified first value; and/or, determining an end address of the OS stack according to a specified second value. One of the start and end addresses of the OS stack equal to one of a start address of and an end address of the first portion.

In a particular embodiment of the second aspect, allocating the second portion to the JCVM stack comprises: determining a start address of the JCVM stack according to a specified third value; and/or, determining an end address of the JCVM stack according to a specified fourth value. One of the start and end addresses of the JCVM stack equal to one of a start address of and an end address of the first portion.

In a particular embodiment of the second aspect, allocating the third portion to the heap comprises: determining a start address of the third portion according to a sum of a start address of the fourth portion and a size of the fourth portion.

In a particular embodiment of the second aspect, allocating the third portion to the heap comprises: determining an end address of the third portion according to a start address of the first portion.

In a particular embodiment of the second aspect, the size of the fourth portion is determined according to sizes of the global variables and/or static local variables stored in the initialized segment.

In a particular embodiment of the second aspect, the first portion is configured to store the whole OS stack and the whole JCVM stack, and the method further comprises: determining a size of the first portion to be smaller than a sum of first maximum memory consumption of the OS stack and second maximum memory consumption of the JCVM stack. The first maximum memory consumption of the OS stack is maximum memory consumed by data elements of the OS stack within the volatile memory during execution of the native code. The second maximum memory consumption of the JCVM stack is maximum memory consumed by data elements of the JCVM stack within the volatile memory when the JCVM thread runs.

In a particular embodiment of the second aspect, the method further comprises: configuring addresses occupied by data elements in the JCVM stack to grow from a start address of the JCVM stack towards a start address of the OS stack, as the number of the data elements in the JCVM stack increases; and configuring addresses occupied by data elements in the OS stack to grow from the start address of the OS stack towards the start address of the JCVM stack, as the number of the data elements in the OS stack increases.

In a particular embodiment of the second aspect, the method further comprises: configuring a location, relative to one end of the first portion, of a boundary between one data element of the JCVM stack and one adjacent data element of the OS stack to vary dynamically as the number of data elements in the JCVM stack and the number of data elements in the OS stack vary.

The method according to the various embodiments of the second aspect may be performed by a device or system for managing the volatile memory. For example, the method may be performed by the Java Card device according to the first aspect, and/or, by one or more devices independent of said Java Card device.

According to a particular embodiment of the invention, for each step (or operation) of the method as defined in the second aspect of the present invention, the device or system for managing the volatile memory may comprise a corresponding module configured to perform said step.

Where functional modules are referred to in the present invention for carrying out various steps (or operations) of the described method(s), it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Accordingly, the invention also provides one or more computer programs on one or more recording media. The one or more computer programs are arranged to be implemented by a device or system (such as the device or system for managing the volatile memory, which is described above), and more generally by one or more processors. The one or more computer programs comprise instructions adapted for the implementation of the method for managing the volatile memory as defined by the second aspect of the present invention.

The computer programs of the invention can be expressed in any programming language, and can be in the form of source code, object code, or any intermediary code between source code and object code, such that in a partially-compiled form, for instance, or in any other appropriate form.

Additionally, it is noted that the program(s) of instructions to implement the present invention could be stored on a number of computer-readable memory devices and storage media. For example, during actual execution, the program instructions would reside in a RAM memory device. When not being actually executed, the program instructions would reside in memory such as a ROM memory device, so as to be selectively executable. Alternatively, the program instructions might be remotely stored on a memory device of a server available through a network, or might be stored in a standalone storage device such as an optical disk or other suitable non-transitory memory device capable of tangibly embodying a program of machine-readable instructions and suitable for insertion into an input device on a computer, for loading the machine-readable instructions onto a memory device within the computer, as is well known in the art.

The invention also provides a recording medium readable by a device, or more generally by a processor, this recording medium comprising computer program instructions as mentioned above.

In addition, the recording medium can be any entity or device capable of storing the computer program. For example, the recording medium can comprise a storing means, such as a ROM memory (a CD-ROM or a ROM implemented in a microelectronic circuit), or a magnetic storing means such as a floppy disk or a hard disk for instance.

Moreover, each recording medium previously mentioned can correspond to a transmittable medium, such as an electrical or an optical signal, which can be conveyed via an electric or an optic cable, or by radio or any other appropriate means. The computer program according to the invention can in particular be downloaded from the Internet or a network of the like.

Alternatively, the recording medium can correspond to an integrated circuit in which a computer program is loaded, the circuit being adapted to execute or to be used in the execution of the methods of the invention.

The various embodiments defined above in connection with the method of the second aspect of present invention may apply in an analogous manner to the Java Card device, the device or system for managing the volatile memory, the computer program and the non-transitory computer readable medium of the present invention.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### Brief description of the drawings

Particular embodiments of the invention and advantages thereof will be described below in detail, by way of example, with reference to the accompanying drawings on which:
- **figure 1** is a schematic diagram of the architecture of a typical Java Card device in the related art;
- **figure 2** is a block diagram representing schematically a Java Card device according to a first embodiment of the invention;
- **figure 3** is a schematic diagram of a first portion of a volatile memory according to an implementation of the first embodiment of the invention;
- **figure 4** is a schematic diagram of the volatile memory according to another implementation of the first embodiment of the invention;
- **figure 5** is a flow chart illustrating schematically operations of a method for managing a volatile memory according to a second embodiment of the invention;
- **figure 6** is a flow chart illustrating schematically an operation of the method for managing the volatile memory according to an implementation of the second embodiment of the invention;
- **figure 7** is a flow chart illustrating schematically operations of the method for managing the volatile memory according to another implementation of the second embodiment of the invention;
- **figures 8A** and **8B** are block diagrams illustrating schematically sub-operations of an operation S501 of the method for managing the volatile memory according to still another implementation of the second embodiment of the invention;
- **figures 9A** and **9B** are block diagrams illustrating schematically sub-operations of an operation S502 of the method for managing the volatile memory according to still another implementation of the second embodiment of the invention;
- **figures 10A** and **10B** are block diagrams illustrating schematically sub-operations of an operation S503 of the method for managing the volatile memory according to still another implementation of the second embodiment of the invention;
- **figure 11** is a schematic block diagram of a device or system for managing a volatile memory according to a third embodiment of the invention;
- **figure 12** is a schematic block diagram of a device or system for managing a volatile memory according to a fourth embodiment of the invention;
- **figure 13** is a schematic block diagram of the device or system for managing the volatile memory according to an implementation of the fourth embodiment of the invention;
- **figure 14** is a schematic block diagram of the device or system for managing the volatile memory according to another implementation of the fourth embodiment of the invention;
- **figures 15A** and **15B** are schematic block diagrams of sub-modules of a first allocating module 1201 of the device or system for managing the volatile memory according to still another implementation of the fourth embodiment of the invention;
- **figures 16A** and **16B** are schematic block diagrams of sub-modules of a second allocating module 1202 of the device or system for managing the volatile memory according to still another implementation of the fourth embodiment of the invention;
- **figures 17A** and **17B** are schematic block diagrams of sub-modules of a third allocating module 1203 of the device or system for managing the volatile memory according to still another implementation of the fourth embodiment of the invention.

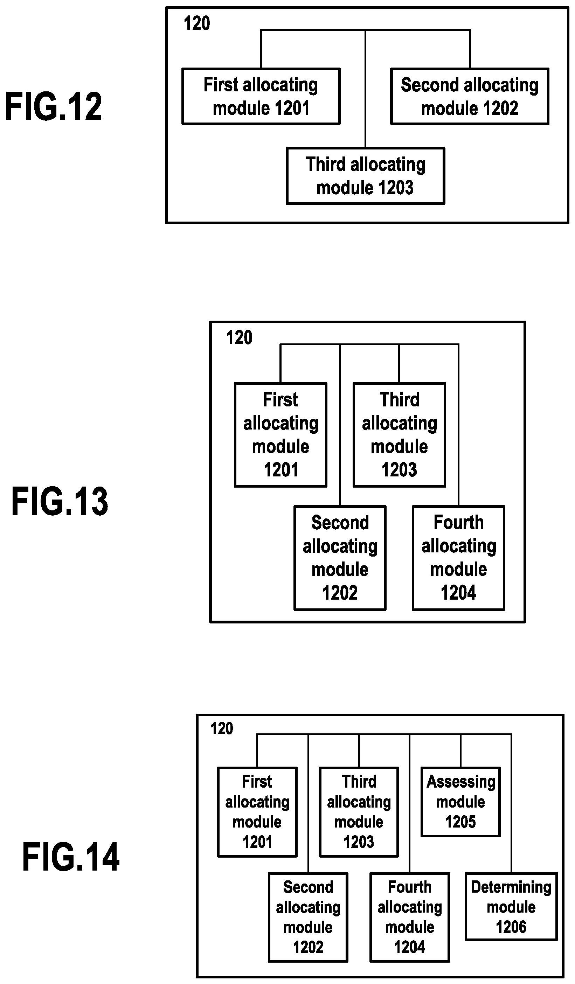

In **figures 12 to 17B****,** the represented blocks are purely functional entities, which do not necessarily correspond to physically separate entities. Namely, they may be developed in the form of software, hardware, or be implemented in one or several integrated circuits, comprising one or more processors.

For simplicity and clarity of illustration, the same reference numerals will be used throughout the figures to refer to the same or like parts, unless indicated otherwise.

### Description of particular embodiments

The following description of the exemplary embodiments refers to the accompanying drawings. The following detailed description does not limit the invention. Instead, the scope of the invention is defined by the appended claims. In various embodiments as illustrated in the figures, a method for managing a volatile memory and a Java Card device (also named Java Card technology-based device) are described.

It is to be understood that the figures and descriptions of the present invention have been simplified to illustrate elements that are relevant for a clear understanding of the present invention, while eliminating, for purposes of clarity, many other elements found in typical Java Card devices and memory management methods.

The flowcharts and/or block diagrams in the figures illustrate the configuration, operations and functionality of possible implementations of devices, method and computer program products according to various embodiments of the present invention. In this regard, each block in the flowcharts or block diagrams may represent a module, segment, or portion of code, which comprises one or more executable instructions for implementing the specified logical function(s).

The term "address" herein may be understood as virtual address. The virtual addresses are provided by an OS kernel (core part of the OS which is responsible, for example, to manage hardware components such as a memory).

The term "may" hereinafter indicates possible implementations of embodiments of the invention. Features characterized by said term and features covered by other implementations and/or by other examples can be implemented independently of each other or in combination, unless otherwise specified.

As depicted in **figure 2****,** a Java Card device 20 according to a first embodiment of the present invention includes a volatile memory 201, an operating system (hereinafter "OS") 202, and a Java Card virtual machine (hereinafter "JCVM") 203. The JCVM 203 comprises a JCVM thread 2031, that is, a basic unit of Java Card applet execution as specified by the JCCRE.

The volatile memory 201 may be a static RAM, dynamic RAM, or any other kind of volatile memory.

The OS block 202 shown in **figure 2** and the OS block 1032 shown in **figure 1** may represent the same operating system or different operating systems.

The OS 202 may be any OS compatible with the Java Card technology, such as Windows, Linux or macOS. The OS 202 may be programmed or defined in any programming language suitable for programming the OS, e.g., any one or any combination of C, C++, python, an assembly language, and etc.

As illustrated by **figure 2****,** the Java Card device 20 may comprise a ROM 205. The OS 202 and the JCVM 203 may be stored in the ROM 205. The Java Card device 20 may further comprise a processor 204 connected with the ROM 205 and with the volatile memory 201. The processor 204 may be configured to execute the OS 202 and the JCVM 203. As an example, the processor 204 may be a central processing unit (hereinafter "CPU").

As illustrated by **figure 2****,** the volatile memory 201 comprises in this example a first portion 2011, a second portion 2012 within the first portion 2011, and a third portion 2013 outside the first portion 2011.

The size of the second portion 2012 may be equal to or smaller than the size of the first portion 2011.

The term "portion" herein refers to a memory portion or memory area, being continuous at least in the virtual address space. That is, a portion of the volatile memory 201 herein is formed by one or more memory chunks having consecutive addresses.

The first portion 2011 is allocated to an OS stack 301. The OS stack 301 supports execution of native code. The native code may be executed by the processor 204.

Said native code whose execution is supported by the OS stack 301, is defined in a language used for programming the OS 202, meaning that instead of being compiled to bytecode, said native code is compiled to the native instruction set that is to be executed directly by the processor 204.

Said native code whose execution is supported by the OS stack 301 may be any kind of native code comprised in the Java Card device 20. For example, said native code may include any one or combination of: native program(s) comprised in the OS 202 (that is, part of the OS 202 or the OS 202 itself); native applications that can be used from outside the Java Card device 20 in the same way as a Java Card applet; and native libraries used by one or more of the native applications, or used to implement/support one or more Java Card APIs (e.g. cryptographic libraries).

Since the Java Card device 20 can be accessed through application protocol data units (hereinafter "APDUs"), functionalities of the native programs comprised in the OS 202 can also be accessed through APDUs. But the native program(s) comprised in the OS 202 does not expose any APIs/methods which can be used by any external application (i.e. outside of the Java Card device 20).

The native applications may run on top of the OS 202. The native applications may reside in parallel to the Java Card system (hereinafter "JCS") of the Java Card device 20. One or more of the native applications may implement, or be used by, the JCS of the Java Card device 20. The JCS of the Java Card device 20 may be the same as the JCS 102 illustrated by **Figure 1****.** Examples of the native applications include a wireless internet browser (hereinafter "WIB") and an over the air (hereinafter "OTA") application.

The native libraries cannot be used from the outside of the Java Card device 20 directly. Like the native programs, the native libraries do not expose any APIs/methods which can be used by any external application outside of the Java Card device 20. The native libraries may be used by the JCS of the Java Card device 20 to implement the one or more Java Card APIs. The native libraries may include native libraries comprised in the OS 202 (e.g., memory management library or cryptographic engines), and/or, may include native libraries which are not part of the OS 202 (e.g., native libraries running on top of the OS 202). The one or more Java Card APIs may be stored in the ROM 205.

The OS stack 301 may be used to store local variables, temporary variables and/or return addresses of a native thread or native process for executing said native code, depending on the language used for defining said native code.

The second portion 2012 within the first portion 2011 is allocated to a JCVM stack 302. The JCVM stack 302 supports the JCVM thread 2031.

The OS stack 301 and the JCVM stack 302 are stacks as defined in the background section. All data elements of both the OS stack 301 and the JCVM stack 302 occupy different memory areas of the first portion 2011.

The first portion 2011 may be shared between data elements of both the OS stack 301 and the JCVM stack 302. Then the data elements of the OS stack 301 may utilize any memory space within the first portion 2011 which is not occupied by the data elements of the JCVM stack 302. Herein a data element of or in the OS stack 301, or, a data element of or in the JCVM stack 302, refers to a data element (such as a frame) pushed into the corresponding stack, e.g., when a method is invoked by the native code or by the JCVM thread 2031.

The third portion 2013 is allocated to a heap 303. The third portion 2013 does not overlap the first portion 2011 (so it is distinct from the second portion 2012 and the first potion 2011). The third portion 2013, e.g., may be adjacent to the first portion 2011, in the virtual address space.

The whole heap 303 may be stored in the third portion 2013. The heap 303 may be a RAM heap.

Data elements of the heap 303, the OS stack 301 and the JCVM stack 302 occupy different virtual memory areas of the volatile memory 201.

A heap is a hierarchy data structure, a binary tree which satisfies the heap ordering property, which is well known to those skilled in the art. The heap 303 may be a JCVM heap, configured to be a common pool of free memory in the volatile memory 201 usable by the JCVM 203 for dynamic memory allocation. In this common pool of free memory, blocks of memory may be allocated in an arbitrary order for Java class instances and arrays, e.g., CLEAR_ON_RESET and CLEAR_ON_DESELECT objects.

As such, according to the first embodiment of the present invention, the first portion 2011 of the volatile memory 201 may be shared between data elements of the JCVM stack 302 and the OS stack 301 without the heap 303 separating the two stacks 302 and 301, meaning that data elements of the OS stack 301 may make use of any memory area of the first portion 2011 which is not occupied by any data elements of the JCVM stack 302, and *vice versa,* hence increasing the maximum number of data elements that can be stored in each of the OS stack 301 and the JCVM stack 302 without allocating additional memory areas to the OS stack 301 or to the JCVM stack 302. This particular volatile memory layout of the Java Card device 20 according to the first embodiment of the invention thus allows improving usage of the volatile memory. Moreover, since the cost of an RAM chip is directly proportional to the available storage memory space of the chip, the Java Card device 20 according to the first embodiment of the invention also helps to reduce cost of production as low-cost RAM chips may be used to manufacture the Java Card device 20.

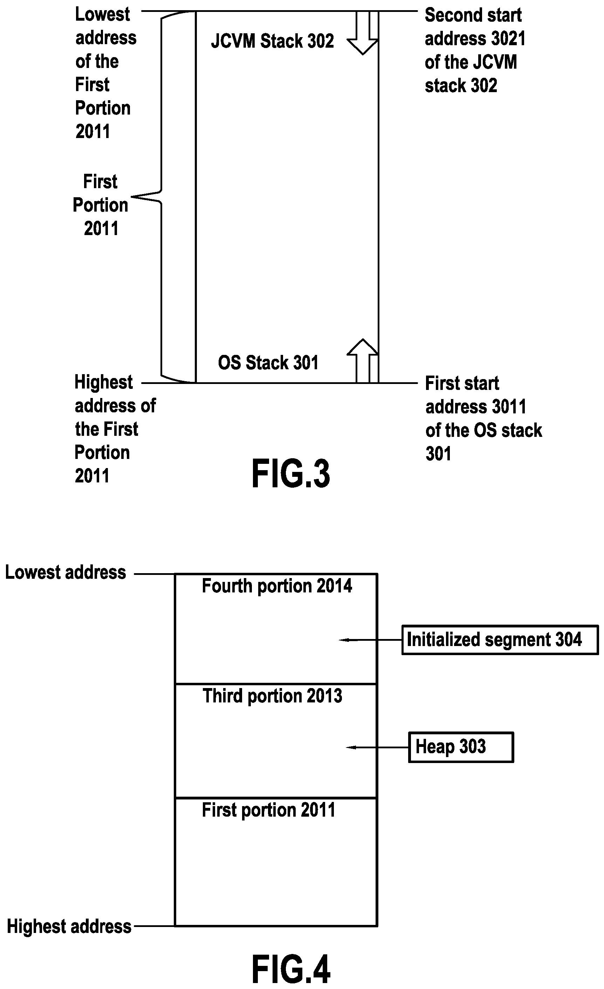

As illustrated by **figure 3****,** the OS stack 301 has a start address referred to as a first start address 3011, and the JCVM stack 302 has a start address referred to as a second start address 3021.

In order to facilitate efficient usage of the volatile memory, the addresses occupied by data elements in the JCVM stack 302 may grow from the second start address 3021 towards the first start address 3011, as the number of data elements stored in the JCVM stack 302 grows. Additionally, the addresses occupied by data elements in the OS stack 301 may grow from the first start address 3011 towards the second start address 3021, as the number of data elements of the OS stack 301 increases. For example, as illustrated by **figure 3****,** the addresses occupied by data elements in the JCVM stack 302 may grow from the lowest address to higher addresses within the first portion 2011, and the addresses occupied by data elements in the OS stack 301 may grow from the highest address to lower addresses within the first portion 2011.

In a particular example, the number of data elements of both the JCVM stack 302 and the OS stack 301 may increase or decrease together. In another particular example, the number of data elements of one of these two stacks 301 and 302 may increase while the number of data elements of the other decreases.

The whole OS stack 301 and the whole JCVM stack 302 may be stored in the first portion 2011 of the volatile memory 201.

The whole JCVM stack 302 may be stored in the second portion 2012 of the volatile memory 201.

The JCVM stack 302 and the OS stack 301 may only have one boundary between them when one data element of the JCVM stack 302 is adjacent to one data element of the OS stack 301, that is, with no gap therebetween, in the virtual address space. Or, both stacks 301 and 302 may have two boundaries between them in the virtual address space, when none of the data elements of the JCVM stack 302 is adjacent to any data element of the OS stack 301, where the two boundaries may delimit a memory area within the first portion 2011 which is not occupied by any data element of either the JCVM stack 302 or the OS stack 301.

In a particular example, the boundary or boundaries between the JCVM stack 302 and the OS stack 301 are not fixed. That is, when the two stacks 301 and 302 have only one boundary therebetween, the location of the boundary between the JCVM stack 302 and the OS stack 301 varies dynamically as the number of data elements in the JCVM stack 302 and the number of data elements in the OS stack 301 vary. Alternatively or additionally, when the two stacks 301 and 302 have two boundaries therebetween, the location of one of the two boundaries varies dynamically as the number of data elements in the JCVM stack 302 varies, and/or, the location of the other one of the two boundaries varies dynamically as the number of data elements in the OS stack 301 varies. Herein the location of a boundary between the two stacks refers to a location relative to one end of the first portion 2011. In this way, the JCVM stack 302 and the OS stack 301 may make efficient use of the volatile memory.

Herein each portion of the volatile memory 201 (e.g., the first portion 2011, the second portion 2012, the third portion 2013 and the fourth portion 2014 illustrated by **figure 4**) has a start address and an end address. Herein the start address of a portion refers to the lowest address within the portion, and the end address of the portion refers to the highest address within the portion, although other implementations are also possible.

In a particular example, as illustrated by **figure 3****,** to make more efficient use of the volatile memory 201 and to facilitate the allocation of the second portion 2012 to the JCVM stack 302 at the operation S502 (as described further below), the start address of the first portion 2011 may be the same as the start address of the JCVM stack 302, when addresses occupied by data elements in the JCVM stack 302 grow from the lowest address of the first portion 2011 to higher addresses within the first portion 2011.

In another example, to make more efficient use of the volatile memory 201 and to facilitate the allocation of the second portion 2012 to the JCVM stack 302 at the operation S502 (as described further below), the end address of the first portion 2011 may be the same as the start address of the JCVM stack 302, when addresses occupied by data elements in the JCVM stack 302 grow from the highest address of the first portion 2011 to lower addresses within the first portion 2011.

In a particular example, as illustrated by **figure 3****,** to make more efficient use of the volatile memory 201, the end address of the first portion 2011 may be the same as the start address of the OS stack 301, when addresses occupied by data elements in the OS stack 301 grow from the highest address of the first portion 2011 to lower addresses within the first portion 2011.

In another example, to make more efficient use of the volatile memory 201, the start address of the first portion 2011 may be the same as the start address of the OS stack 301, when addresses occupied by data elements in the OS stack 301 grow from the lowest address of the first portion 2011 to higher addresses within the first portion 2011.

To reduce the memory consumed by data elements of the JCVM stack 302, the JCVM stack 302 may be implemented by using an array. In a particular example, the JCVM stack 302 may be configured as a Uint16Array typed array. The Uint16Aarray typed array is a built-in object of the JavaScript, well known to the skilled person. Similarly, the OS stack 301 may be implemented by using an array as well. Other implementations are, however, possible.

It should be understood that memory consumption of data elements of both the JCVM stack 302 and the OS stack 301, i.e. the respective memory areas occupied by the data elements of these stacks within the volatile memory 201, may vary over time depending on various factors. It is considered in a particular example that the OS stack 301 reaches its first maximum memory consumption, C₁ₘₐₓ, when a maximum amount of memory is consumed by the data elements of the OS stack 301 within the volatile memory 201 during execution of the native code which is supported by the OS stack 301. Similarly, the JCVM stack 302 reaches its second maximum memory consumption, C₂ₘₐₓ, when a maximum amount of memory is consumed by the data elements of the JCVM stack 302 within the volatile memory 201 during the execution of the JCVM thread 2031.

According to a first approach, the size of the JCVM stack 302 may be set as C₂ₘₐₓ and the size of the OS stack 301 may be set as C₁ₘₐₓ. Yet during complete feature testing of various Java Card devices, the Applicant has observed that in practice, the amount of volatile memory consumed by data elements of the OS stack 301 and the amount of volatile memory consumed by data elements of the JCVM stack 302 never reach their respective maximums concurrently. In other words, whenever the OS stack 301 reaches its maximum memory consumption C₁ₘₐₓ, the memory consumption of the JCVM stack 302 is always less (or even significantly less) than its maximum C₂ₘₐₓ, and *vice versa.* Accordingly, according to a second approach, which is an implementation of the first embodiment of the invention, when the first portion 2011 stores the whole OS stack 301 and the whole JCVM stack 302, the size of the first portion 2011 of the volatile memory 201 may be set to be smaller than the sum of the first maximum memory consumption, C₁ₘₐₓ, of the OS stack 301 and the second maximum memory consumption, C₂ₘₐₓ, of the JCVM stack 302. As such, compared with the first approach where the amount of volatile memory reserved for both the OS stack 301 and the JCVM stack 302 equals to the sum of C₁ₘₐₓ and C₂ₘₐₓ, in the second approach the amount of volatile memory reserved for both the stacks 301 and 302 becomes smaller, thereby further optimizing volatile memory usage.

According to an implementation of the first embodiment as illustrated by **figure 4****,** the volatile memory 201 may further comprise a fourth portion 2014, which does not overlap the first portion 2011 or the third portion 2013 of the volatile memory 201 (so it is distinct from the first portion 2011 and the third portion 2013). The fourth portion 2014 of the volatile memory 201 is allocated to an initialized segment 304. The initialized segment 304 may store initialized and/or uninitialized global variables. Since global variables are not allowed in Java, as is well known in the art, said global variables stored in the initialized segment 304 may be global variables of any native code of the Java Card device 20, such as the native code whose execution is supported by the OS stack 301.

Additionally or alternatively, the initialized segment 304 may store static local variables. Since static local variables are not allowed in Java, either, as is well known in the art, said static local variables stored in the initialized segment 304 may be static local variables of any native code of the Java Card device 20, such as the native code whose global variables are stored in the initialized segment 304, or the native code whose execution is supported by the OS stack 301.

As illustrated by **figure 4****,** the third portion 2013 may be positioned between the fourth portion 2014 and the first portion 2011, in the virtual address space.

As the number of data elements stored in the initialized segment 304 increases, addresses occupied by the data elements in the initialized segment 304 may grow from the lowest or the highest address of the fourth portion 2014, depending on the specification of the programming language in which the OS 202 is programmed. In a particular example, addresses occupied by the data elements in the initialized segment 304 may grow in the same direction as those occupied by data elements in the JCVM stack 302. Herein the data elements stored in the initialized segment 304 refer to the global variables and/or the static local variables described above.

The whole initialized segment 304 may be stored in the fourth portion 2014 of the volatile memory 201.

The start address of the fourth portion 2014 of the volatile memory 201 may be the lowest address of the volatile memory 201. Or, the end address of the fourth portion 2014 may be the highest address of the volatile memory 201.

The end address of the first portion 2011 of the volatile memory 201 may be the highest address of the volatile memory 201. Or, the start address of the first portion 2011 may be the lowest address of the volatile memory 201.

In an example, as illustrated by **figure 4****,** the third portion 2013 may start immediately after the fourth portion 2014 ends in the virtual address space. The start address of the heap 303 may immediately follow the end address of the initialized segment 304, or a gap may exist between the start address of the heap 303 and the end address of the initialized segment 304.

The OS stack 301 may be filled with one or more data elements at run-time of the native code whose execution is supported by the OS stack 301. The JCVM stack 302 may be filled with one or more data elements at run-time of the JCVM thread 2031. The initialized segment 304 may be filled with one or more data elements at link-time (during the compilation process which include compiling and linking) of any native code whose global variables and/or static local variables are stored in the initialized segment 304. The heap 303 may be filled with one or more data elements at run-time of the JCVM 203.

The Java Card device 20 according to the first embodiment of the disclosure may be a smart card or a similar trusted device with limited memory and processing capabilities, such as a smart button or a USB token. The Java Card device 20 may be contact and/or contactless. If it is contactless, it may include a transceiver. For example, the Java Card device 20 may include a miniature radio transceiver and an antenna.

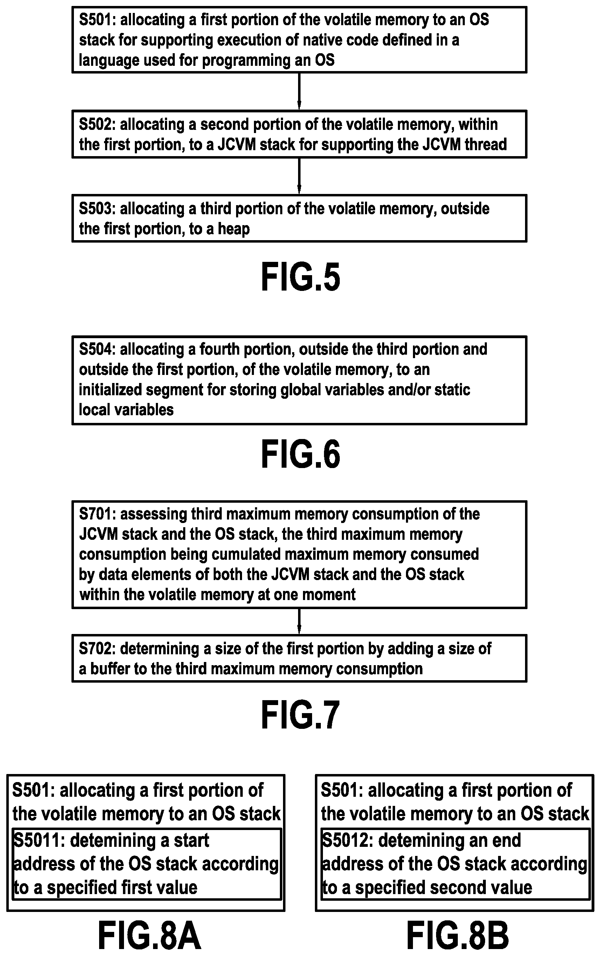

As illustrated by **figure 5****,** a second embodiment of the invention provides a method for managing a volatile memory. According to an implementation of the second embodiment, the method may be implemented by a device for or a system including a plurality of devices for managing the volatile memory. The device or system for managing the volatile memory may include the Java Card device 20 as previously described with reference to any one of the **figures 2-4** or a part thereof (such as the processor 204), and/or, may include one or more devices independent of the Java Card device 20. The volatile memory managed by the method according to the second embodiment may be the volatile memory 201 as previously described with reference to any one of the **figures 2-4****.** The various implementations of the first embodiment defined above in connection with the Java Card device 20 may apply in an analogous manner to the method according to the second embodiment of the invention.

More specifically, according to another implementation of the second embodiment, the device or system for managing the volatile memory may implement the method by executing a computer program. The method comprises operations S501- S503 as described further below.

At the operation S501, a first portion 2011 of the volatile memory 201 is allocated to an OS stack 301. The OS stack 301 supports execution of native code defined in a language used for programming an OS 202.

At the operation S502, a second portion 2012 of the volatile memory 201, within the first portion 2011, is allocated to a JCVM stack 302 for supporting the JCVM thread 2031. In other words, the OS stack 301 and the JCVM stack 302 share the first portion 2011.

At the operation 503, a third portion 2013 of the volatile memory 201, outside the first portion 2011, is allocated to a heap 303.

According to the second embodiment of the invention, the first portion 2011 of the volatile memory 201 may be shared between data elements of both the JCVM stack 302 and the OS stack 301 without the heap 303 separating the two stacks 302 and 301, meaning that data elements of the OS stack 301 may make use of all memory spaces of the first portion 2011 which are not occupied by any data elements of the JCVM stack 302, and *vice versa,* hence increasing the maximum number of data elements that can be stored in each of the two stacks 301 and 302 without allocating additional memory areas to the OS stack 301 or to the JCVM stack 302. This particular method for managing the volatile memory 201 thus allows improving usage of the volatile memory and reduces manufacturing cost of the Java Card device 20.

As illustrated by **figure 6****,** in a particular example, the method according to the second embodiment of the invention may further comprise an operation S504, where a fourth portion 2014 of the volatile memory 201 is allocated to an initialized segment 304. The initialized segment 304 stores initialized and/or uninitialized global variables, and/or, stores static local variables. The first portion 2011, the third portion 2013 and the fourth portion 2014 of the volatile memory 201 do not overlap. The third portion 2013 may lie between the first portion 2011 and the fourth portion 2014 of the volatile memory 201. For example, the third portion 2013 may be adjacent to the fourth portion 2014 and the first portion 2011, respectively, in the virtual address space.

Implementation orders of the operations S501-S504 are interchangeable, and the operations S501-S504 may be implemented independently of each other. For example, the operations S501-S504 may be performed at the same time. The operations S501-S504 may also be implemented during link-time of the software system or all software of the Java Card device 20 before the software system is loaded onto the Java Card device 20.

In an implementation of the second embodiment, the method may further include the following operation: determining the size of the first portion. For example, as illustrated by **figure 7****,** the method according to the second embodiment of the invention may further comprise the following operations S701 and S702.

At the operation S701, third maximum memory consumption, C₃ₘₐₓ, of the JCVM stack 302 and the OS stack 301 may be assessed.

At different moments, a total amount of volatile memory, or cumulated memory within the volatile memory 201, consumed by data elements of both the JCVM stack 302 and the OS stack 301 may be different. The third maximum memory consumption, C₃ₘₐₓ, refers to a maximum of volatile memory consumed by data elements of both the JCVM stack 302 and the OS stack 301 at one moment.

For example, at any moment tₓ, the total amount of volatile memory consumed by data elements of both the JCVM stack 302 and the OS stack 301 is Cₓ. The third maximum memory consumption, C₃ₘₐₓ, consumed by data elements of the two stacks 301 and 302 at a moment t₃ₘₐₓ, is not less than any cumulated memory consumed by data elements of the two stacks 301 and 302 within the volatile memory 201 at any other moment.

The third maximum memory consumption, C₃ₘₐₓ, may be assessed by using a complete feature testing method. The complete feature testing method tests each feature of one or more Java applets and/or native code to be loaded onto the Java Card device 20. The features may be defined as changes that add new functionality to or modify existing functionality of the software system of the Java Card device 20. An aim of the complete feature testing method is to make sure that software system meets all intended requirements.

For example, during implementation of the complete feature testing method, the amount of volatile memory consumed by data elements of both the JCVM stack 302 and the OS stack 301 is logged over time to observe the maximum of volatile memory consumed by data elements of both stacks 301 and 302, that is, the third maximum memory consumption, C₃ₘₐₓ.

At the operation S702, the size of the first portion 2011 may be determined by adding the size of a buffer to the third maximum memory consumption, C₃ₘₐₓ.

At the operation S702, the size of the buffer is added to the third maximum memory consumption, C₃ₘₐₓ, to calculate the size of the first portion 2011 to avoid stack overflow of either the OS stack 301 or the JCVM stack 302.

The size of the buffer is greater than zero and may be determined as a function of the third maximum memory consumption, C₃ₘₐₓ. E.g., the size of the buffer may be determined as 10% of the third maximum memory consumption, C₃ₘₐₓ.

In another particular example, the first portion 2011 stores the whole OS stack 301 and the whole JCVM stack 302. The method according to the second embodiment of the invention may further include the following operation: configuring/determining the size of the first portion 2011 to be smaller than a sum of second maximum memory consumption of the JCVM stack 302 and first maximum memory consumption of the OS stack 301. The second maximum memory consumption of the JCVM stack 302 is maximum memory consumed by data elements of the JCVM stack 302 within the volatile memory 201 when the JCVM thread 2031 runs. The first maximum memory consumption of the OS stack 301 is maximum memory consumed by data elements of the OS stack 301 within the volatile memory 201 during execution of the native code.

Accordingly, the first portion 2011 of the volatile memory 201 may be allocated to the OS stack 301 at the operation S501 after the size of the first portion 2011 is determined, and/or, according to the determined size of the first portion 2011.

In order to perform each of the operations S501-S504, the method according to the second embodiment of the invention may include operation(s) of determining the start address of and/or end address of the corresponding portion of the volatile memory 201. For example, to allocate the first portion 2011 to the OS stack 301 at the operation S501, the method according to the second embodiment of the invention may include the operation(s) of determining the start address of and/or end address of the first portion 2011.

The start or end address of each of the first, second, third and fourth portion 2011-2014 of the volatile memory 201 may be determined according to a specified value (such as determined to be the specified value), which can be obtained directly from a script used for performing said operation of determining the start or end address of the corresponding portion of the volatile memory 201, or according to the start address of, end address of, or size of another portion of the volatile memory 201 adjacent to the corresponding portion, or according to sizes of data elements stored in the corresponding portion. For example, the third portion 2013 is adjacent to the fourth portion 2014, first portion 2011 and the second portion 2012.

In a particular example, the operations S501-S504 may be performed by a processor executing a linker script file. The processor is part of the device or system for managing the volatile memory 201. The linker script file may be stored outside of the Java Card device 20. Accordingly, the start or end address of each portion of the volatile memory 201 may be determined according to a specified value of a location counter in the linker script file.

The start address of the OS stack 301 may equal the start or end address of the first portion 2011. Accordingly, said operation of determining the start or end address of the first portion 2011 may be implemented by determining the start address of the OS stack 301. For example, as illustrated by an operation S5011 of **figure 8A****,** said operation of determining the start address of the OS stack 301 may be performed according to a specified first value. A specified value herein refers to a value which is directly defined or set in the script used for performing the operation (e.g., in a linker script file), such as 0x8000000.

The end address of the OS stack 301 is different from its start address. Alternatively or additionally, the end address of the OS stack 301 may equal the start or end address of the first portion 2011. Accordingly, said operation of determining the start or end address of the first portion 2011 may be implemented by determining the end address of the OS stack 301. For example, as illustrated by an operation S5012 of **figure 8B****,** said operation of determining the end address of the OS stack 301 may be performed according to a specified second value.

In a particular example, the first value may be specified as the highest address of the volatile memory 201, and the second value may be specified as the difference between the highest address of the volatile memory 201 and the determined size of the first portion 2011.

By setting the start and end addresses of the first portion 2011 to be the specified first and second values, respectively, the size of the first portion 2011 may be set to avoid overflow of either the JCVM stack 302 or the OS stack 301.

The start and end addresses of the second portion 2012 may equal the start and end addresses of the JCVM stack 302, respectively. Accordingly, said operation of determining the start or end address of the second portion 2012 may be implemented by determining the start or end address of the JCVM stack 302, respectively. The end address of the JCVM stack 302 is different from its start address.

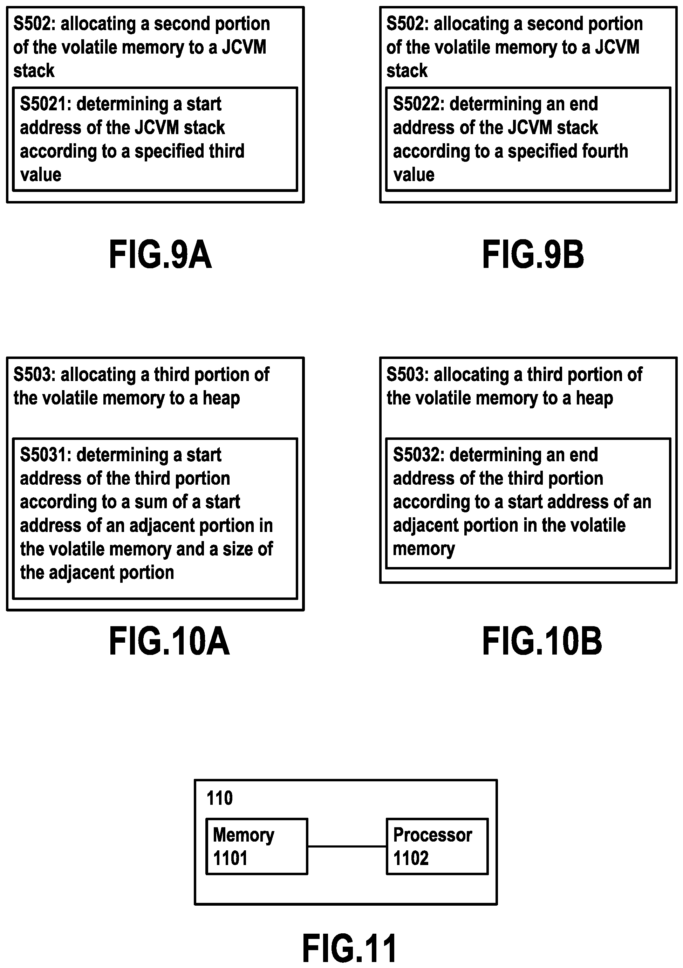

The start address of the JCVM stack 302 may be determined according to a specified third value as illustrated by the operation S5021 in **figure 9A****.** The start address of the JCVM stack 302 may equal the start address or end address of the first portion 2011. For example, the specified third value may equal the specified second value.

The end address of the JCVM stack 302 may be determined according to a specified fourth value as illustrated by the operation S5022 in **figure 9B****.** The end address of the JCVM stack 302 may equal the start address or end address of the first portion 2011. For example, the specified fourth value may equal the specified first value.

The start and end address of the third portion 2013 may equal the start and end address of the heap 303, respectively. In an example, the start address of the third portion 2013 or of the heap 303 may be determined according to the end address of an adjacent portion of the volatile memory, or according to a sum of the start address and size of the adjacent portion as illustrated by the operation S5031 in **figure 10A****.** The start address of the third portion 2013 or of the heap 303 may equal the sum, immediately follow the end address of the adjacent portion, or there may be a gap between the start address of the third portion and the end address of the adjacent portion.

For example, the third portion 2013 is placed after the fourth portion 2014 in the virtual memory space of the volatile memory 201. Then the start address of the third portion 2013 may be determined as the sum of the start address and size of the fourth portion 2014.

In another example, the end address of the third portion 2013 or of the heap 303 may be determined according to the start address of an adjacent portion of the volatile memory as illustrated by the operation S5032 of **figure 10B****,** and may immediately before the start address of the adjacent portion or there may be a gap between the end address of the third portion and the start address of the adjacent portion.

In an example, the third portion 2013 is placed before the first portion 2011 in the virtual memory space of the volatile memory 201. Then the end address of the third portion 2013 may be determined according to the start address of the first portion 2011.

By determining the start and end addresses of the third portion 2013 according to the end address of one adjacent portion and the start address of another adjacent portion, respectively, the third portion 2013 may make use of free memory spaces within the volatile memory 201 between the two portions adjacent to the third portion 2013 after sufficient memory areas have been allocated to said two portions.

The start and end address of the fourth portion 2014 may equal the start and end address of the initialized segment 304, respectively. The start address of the fourth portion 2014 may be determined to be a specified fifth value, such as the lowest address of the volatile memory 201. The end address of the fourth portion 2014 may be determined according to the size of the fourth portion 2014 and the start address of the fourth portion 2014. The size of the fourth portion 2014 may be determined according to the sum of the sizes of the data elements (such as the global variables and/or static local variables) stored in the initialized segment 304, e.g., after the data elements are compiled by the device for system for managing the volatile memory 201.

By determining the size of the fourth portion 2014 according to the sizes of the data elements stored in the initialized segment 304, it is ensured that sufficient memory spaces within the volatile memory 201 are allocated to the initialized segment 304 to contain all the global variables and/or static local variables that need to be stored in the initialized segment 304.

In an implementation of the second embodiment, the method further includes the following operations: configuring addresses occupied by data elements in the JCVM stack 302 to grow from the start address 3021 of the JCVM stack 302 towards the start address 3011 of the OS stack 301, as the number of the data elements in the JCVM stack 302 increases; and configuring addresses occupied by data elements in the OS stack 301 to grow from the start address 3011 of the OS stack 301 towards the start address 3021 of the JCVM stack 302, as the number of the data elements in the OS stack 301 increases.

In another implementation of the second embodiment, the method further includes the following operation: configuring the location, relative to one end of the first portion, of a boundary between one data element of the JCVM stack 302 and one adjacent data element of the OS stack 301 to vary dynamically as the number of data elements in the JCVM stack 302 and the number of data elements in the OS 301 stack vary.

Different operations according to the various implementations of the second embodiment of the invention may be performed by different devices or the same device.

It should be noted that, in some alternative implementations, the functions noted in the blocks may occur out of the order noted in the figures. For example, two blocks shown in succession may, in fact, be executed substantially concurrently, or the blocks may sometimes be executed in the reverse order, or blocks may be executed in an alternative order, depending upon the functionality involved.

According to a third embodiment of the invention, the method according to the second embodiment of the invention may be performed by a device or system 110 for managing the volatile memory as illustrated by **figure 11****.** The device or system 110 may include the Java Card device 20 or a part thereof (such as the processor 204), and/or, may include one or more devices independent of the Java Card device 20. As illustrated by **figure 11****,** the device 110 for managing the volatile memory comprises one or more memories represented by the memory 1101 and one or more processors represented by the processor 1102. The processor 1102 as illustrated by **figure 11** may be the same as the processor 204 as illustrated by **figure 2****.** The memory 1101 is configured to store one or more instructions, and the processor 1102 is configured to execute the one or more instructions to perform the method according to the second embodiment of the invention (that is, according to any of the implementations/examples above of the second embodiment of the invention).

According to a fourth embodiment of the invention, the method according to the second embodiment of the invention may be performed by a device or system 120 for managing the volatile memory as illustrated by **figure 12****.** The device or system 120 may include the Java Card device 20 or a part thereof (such as the processor 204), and/or, may include one or more devices independent of the Java Card device 20. The device or system 120 may be the same as the device or system 110. As illustrated by **figure 12****,** the device or system 120 for managing the volatile memory may be implemented in the form of modules.

The various implementations of the first embodiment defined above in connection with the Java Card device 20, and of the second embodiment defined above in connection with the method for managing the volatile memory, may apply in an analogous manner to the device or system 120 according to the fourth embodiment of the invention.

As illustrated by **figure 12****,** the device or system 120 comprises a first allocating module 1201, a second allocating module 1202 and a third allocating module 1203.

The first allocating module 1201 is configured to perform the operation S501 described above with reference to **figure 5****,** of allocating the first portion 2011 of the volatile memory 201 to the OS stack 301.

The second allocating module 1202 is configured to perform the operation S502 described above with reference to **figure 5****,** of allocating the second portion 2012 of the volatile memory 201 to the JCVM stack 302.

The third allocating module 1203 is configured to perform the operation S503 described above with reference to **figure 5****,** of allocating the third portion 2013 of the volatile memory 201 to the heap 303.

The invention may be implemented using software and/or hardware components. In this context, the term "module" can refer in this document to a software component, as well as a hardware component or a plurality of software and/or hardware components.

As illustrated by **figure 13****,** the device or system 120 for managing the volatile memory according to the fourth embodiment of the invention may further comprise a fourth allocating module 1204. The fourth allocating module 1204 is configured to perform the operation of S504 described above with reference to **figure 6****,** of allocating the fourth portion 2014 of the volatile memory 201 to the initialized segment 304 for storing global variables and/or static local variables.

As illustrated by **figure 14****,** the device or system 120 for managing the volatile memory according to the fourth embodiment of the invention may further comprise an assessing module 1205 and a determining module 1206.

The assessing module 1205 may be configured to perform the operation S701 described above with reference to **figure 7****,** of assessing the third maximum memory consumption of the JCVM stack 302 and the OS stack 301.

The determining module 1206 may be configured to perform the operation S702 described above with reference to **figure 7****,** of determining the size of the first portion 2011 by adding the size of the buffer to the third maximum memory consumption.

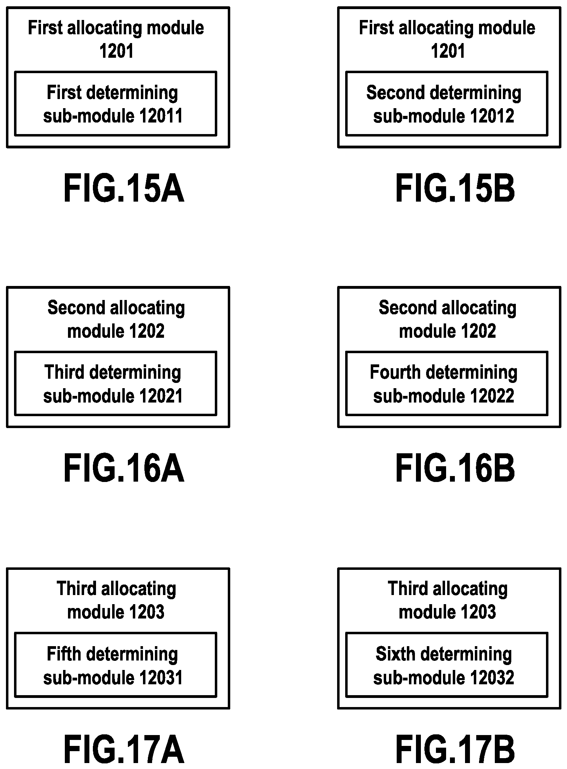

As illustrated by **figure 15A****,** the first allocating module 1201 may comprise a first determining sub-module 12011. The first determining sub-module 12011 is configured to perform the operation of S5011 described above with reference to **figure 8A****,** of determining the start address of the OS stack 301 according to a specified first value.

As illustrated by **figure 15B****,** the first allocating module 1201 may comprise a second determining sub-module 12012. The second determining sub-module 12012 is configured to perform the operation of S5012 described above with reference to **figure 8B****,** of determining the end address of the OS stack 301 according to a specified second value.

As illustrated by **figure 16A****,** the second allocating module 1202 may comprise a third determining sub-module 12021. The third determining sub-module 12021 may be configured to perform the operation of S5021 described above with reference to **figure 9A****,** of determining the start address of the JCVM stack 302 according to a specified third value.

As illustrated by **figure 16B****,** the second allocating module 1202 may comprise a fourth determining sub-module 12022. The fourth determining sub-module 12022 may be configured to perform the operation of S5022 described above with reference to **figure 9B****,** of determining the end address of the JCVM stack 302 according to a specified fourth value.

As illustrated by **figure 17A****,** the third allocating module 1203 may comprise a fifth determining sub-module 12031. The fifth determining sub-module 12031 may be configured to perform the operation of S5031 described above with reference to **figure 10A****,** of determining the start address of the third portion 2013 according to the sum of the start address of an adjacent portion in the volatile memory 201 and the size of the adjacent portion.

As illustrated by **figure 17B****,** the third allocating module 1203 may comprise a sixth determining sub-module 12032. The sixth determining sub-module 12032 may be configured to perform the operation of S5032 described above with reference to **figure 10B****,** of determining the end address of the third portion 2013 according to the start address of an adjacent portion in the volatile memory 201.

According to an implementation of the fourth embodiment of the invention, operation of various modules of the device or system 120 is controlled using a specific applicative software implemented by the device or system 120.

A computer-readable storage medium according to a fifth embodiment of the invention is configured to store one or more instructions. When executed by a processor, said one or more instructions causes the processor to perform the method according to the second embodiment of the invention.

Another aspect of the invention pertains to a computer program product downloadable from a communication network and/or recorded on a medium readable by computer and/or executable by a processor, comprising program code instructions for implementing the operations of the method according to the second embodiment of the invention.

The various embodiments and variants described in this document in relation with the method of the invention applies in an analogous manner to the devices of the present invention, and conversely.

While not explicitly described, the present embodiments may be employed in any combination or combination.

It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions.

As will be appreciated by one skilled in the art, aspects of the present principles can be embodied as a system, method, computer program or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system."

Furthermore, aspects of the present principles can take the form of a computer readable storage medium. Any combination of one or more computer readable storage medium(s) may be utilized. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage mediums to which the present principles can be applied, is merely an illustrative and not exhaustive listing as is readily appreciated by one of ordinary skill in the art: a portable computer disc, a hard disc, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing.

This invention having been described in particular embodiments, it is clear that it is susceptible to numerous modifications and embodiments within the scope of the invention as defined by the following claims.

## Claims

1. A Java Card device (20), comprising:
- a volatile memory (201);
- an operating system, OS (202); and
- a Java Card virtual machine, JCVM (203), comprising a JCVM thread (2031); **characterized in that**, the volatile memory (201) comprises:
- a first portion (2011) allocated to an OS stack (301) for supporting execution of native code defined in a language used for programming the OS (202);
- a second portion (2012) within the first portion (2011), allocated to a JCVM stack (302) for supporting the JCVM thread (2031); and
- a third portion (2013) outside the first portion (2011), allocated to a heap (303).

2. The Java Card device (20) according to claim 1, wherein the volatile memory (201) further comprises a fourth portion (2014) outside the third portion (2013) and outside the first portion (2011), allocated to an initialized segment (304) for storing global variables and/or static local variables.

3. The Java Card device (20) according to claim 1 or 2, wherein
- the first portion (2011) is configured to store the whole OS stack (301) and the whole JCVM stack (302);
- a size of the first portion (2011) is smaller than a sum of first maximum memory consumption of the OS stack (301) and second maximum memory consumption of the JCVM stack (302);
- the first maximum memory consumption of the OS stack (301) is maximum memory consumed by data elements of the OS stack (301) within the volatile memory (201) during execution of the native code; and
- the second maximum memory consumption of the JCVM stack (302) is maximum memory consumed by data elements of the JCVM stack (302) within the volatile memory (201) when the JCVM thread (2031) runs.

4. The Java Card device (20) according to any one of the claims 1 to 3, wherein
addresses occupied by data elements in the JCVM stack (302) are configured to grow from a start address (3021) of the JCVM stack (302) towards a start address (3011) of the OS stack (301), as the number of the data elements in the JCVM stack (302) increases; and
addresses occupied by data elements in the OS stack (301) are configured to grow from the start address (3011) of the OS stack (301) towards the start address (3021) of the JCVM stack (302), as the number of the data elements in the OS stack (301) increases.

5. The Java Card device (20) according to any one of the claims 1 to 4, wherein a location, relative to one end of the first portion (2011), of a boundary between one data element of the JCVM stack (302) and one adjacent data element of the OS stack (301) is configured to vary dynamically as the number of data elements in the JCVM stack (302) and the number of data elements in the OS stack (301) vary.

6. The Java Card device (20) according to any one of the claims 1 to 5, wherein the first portion (2011) and the JCVM stack (302) share a same start address or share a same end address.

7. A method for managing a volatile memory (201), implemented by a Java Card device comprising said volatile memory, an operation system, OS (202), and a Java Card virtual machine, JCVM (203), **characterized in that**, the method comprises:
- allocating (S501) a first portion (2011) of the volatile memory (201) to an OS stack (301) for supporting execution of native code defined in a language used for programming an OS (202);
- allocating (S502) a second portion (2012) of the volatile memory (201), within the first portion (2011), to a JCVM stack (302) for supporting a JCVM thread (2031) of said JCVM (203); and
- allocating (S503) a third portion (2013) of the volatile memory (201), outside the first portion (2011), to a heap (303).

8. The method according to claim 7, further comprising:
allocating (S504) a fourth portion (2014) of the volatile memory (201), outside the first portion (2011) and outside the third portion (2013), to an initialized segment (304) for storing global variables and/or static local variables.

9. The method according to claim 7 or 8, further comprising:
- assessing (S701) third maximum memory consumption of the JCVM stack (302) and the OS stack (301), the third maximum memory consumption being cumulated maximum memory consumed by data elements of both the JCVM stack (302) and the OS stack (301) within the volatile memory (201) at one moment; and
- determining (S702) a size of the first portion (2011) by adding a size of a buffer to the third maximum memory consumption, wherein the size of the buffer is greater than 0.

10. The method according to any one of the claims 7 to 9, wherein one of a start address of and an end address of the OS stack (301) is equal to one of a start address of and an end address of the first portion (2011), and allocating (S501) the first portion (2011) to the OS stack (301) comprises:
determining (S5011) the start address of the OS stack (301) according to a specified first value; and/or,
determining (S5012) the end address of the OS stack (301) according to a specified second value.

11. The method according to any one of the claims 7 to 10, wherein one of a start address of and an end address of the JCVM stack (302) equals one of a start address of and an end address of the first portion (2011), and allocating (S502) the second portion (2012) to the JCVM stack (302) comprises:
determining (S5021) the start address of the JCVM stack (302) according to a specified third value; and/or,
determining (55022) the end address of the JCVM stack (302) according to a specified fourth value.

12. The method according to any one of the claims 8 to 11, wherein allocating (S503) the third portion (2013) to the heap (303) comprises:
determining (S5031) a start address of the third portion (2013) according to a sum of a start address of an adjacent portion in the volatile memory (201) and a size of the adjacent portion.

13. The method according to any one of the claims 7 to 12, wherein allocating (S503) the third portion (2013) to the heap (303) comprises:
determining (S5032) an end address of the third portion (2013) according to a start address of an adjacent portion in the volatile memory (201).

14. The method according to any one of the claims 8 to 13, wherein the size of the fourth portion (2014) is determined according to sizes of the global variables and/or static local variables stored in the initialized segment (304).

15. A computer readable storage medium, storing one or more instructions which, when executed by a processor, enables the processor to perform the method according to any one of the claims 7-14.

## Patentansprüche

1. Java-Kartenvorrichtung (20), die Folgendes umfasst:
- einen flüchtigen Speicher (201);
- ein Betriebssystem (OS) (202); und
- eine virtuelle Java-Kartenmaschine (JCVM) (203), die einen JCVM-Thread (2031) umfasst;
**dadurch gekennzeichnet, dass** der flüchtige Speicher (201) Folgendes umfasst:
- einen ersten Teil (2011), der einem OS-Stapel (301) zugewiesen ist, um die Ausführung von nativem Code zu unterstützen, der in einer Sprache definiert ist, die zum Programmieren des OS (202) verwendet wird;
- einen zweiten Teil (2012) innerhalb des ersten Teils (2011), der einem JCVM-Stapel (302) zum Stützen des JCVM-Threads (2031) zugeordnet ist; und
- einen dritten Teil (2013) außerhalb des ersten Teils (2011), der einem Heap (303) zugeordnet ist.

2. Java-Kartenvorrichtung (20) nach Anspruch 1, wobei der flüchtige Speicher (201) ferner einen vierten Teil (2014) außerhalb des dritten Teils (2013) und außerhalb des ersten Teils (2011) umfasst, der einem initialisierten Segment (304) zum Speichern globaler Variablen und/oder statischer lokaler Variablen zugewiesen ist.

3. Java-Kartenvorrichtung (20) nach Anspruch 1 oder 2, wobei
- der erste Teil (2011) dazu ausgelegt ist, den gesamten OS-Stapel (301) und den gesamten JCVM-Stapel (302) zu speichern;
- eine Größe des ersten Teils (2011) kleiner als eine Summe aus erstem maximalen Speicherverbrauch des OS-Stapels (301) und zweitem maximalen Speicherverbrauch des JCVM-Stapels (302) ist;
- der erste maximale Speicherverbrauch des OS-Stapels (301) der maximale Speicher ist, der durch Datenelemente des OS-Stapels (301) innerhalb des flüchtigen Speichers (201) während der Ausführung des nativen Codes verbraucht wird; und
- der zweite maximale Speicherverbrauch des JCVM-Stapels (302) der maximale Speicher ist, der von Datenelementen des JCVM-Stapels (302) innerhalb des flüchtigen Speichers (201) verbraucht wird, wenn der JCVM-Thread (2031) läuft.

4. Java-Kartenvorrichtung (20) nach einem der Ansprüche 1 bis 3, wobei
Adressen, die von Datenelementen in dem JCVM-Stapel (302) belegt werden, dazu ausgelegt sind, von einer Startadresse (3021) des JCVM-Stapels (302) zu einer Startadresse (3011) des OS-Stapels (301) zu wachsen, wenn die Anzahl der Datenelemente in dem JCVM-Stapel (302) zunimmt; und
Adressen, die von Datenelementen in dem OS-Stapel (301) belegt werden, dazu ausgelegt sind, von der Startadresse (3011) des OS-Stapels (301) zu der Startadresse (3021) des JCVM-Stapels (302) zu wachsen, wenn die Anzahl der Datenelemente in dem OS-Stapel (301) zunimmt.

5. Java-Kartenvorrichtung (20) nach einem der Ansprüche 1 bis 4, wobei ein Ort, relativ zu einem Ende des ersten Teils (2011), einer Grenze zwischen einem Datenelement des JCVM-Stapels (302) und einem benachbarten Datenelement des OS-Stapels (301) dazu ausgelegt ist, dynamisch zu variieren, wenn die Anzahl von Datenelementen in dem JCVM-Stapel (302) und die Anzahl von Datenelementen in dem OS-Stapel (301) variieren.

6. Java-Kartenvorrichtung (20) nach einem der Ansprüche 1 bis 5, wobei der erste Teil (2011) und der JCVM-Stapel (302) eine gleiche Startadresse gemeinsam nutzen oder eine gleiche Endadresse gemeinsam nutzen.

7. Verfahren zum Verwalten eines flüchtigen Speichers (201), implementiert durch eine Java-Kartenvorrichtung, die den flüchtigen Speicher, ein Betriebssystem (OS) (202) und eine virtuelle Java-Kartenmaschine (JCVM) (203) umfasst, **dadurch gekennzeichnet, dass** das Verfahren Folgendes umfasst:
- Zuweisen (S501) eines ersten Teils (2011) des flüchtigen Speichers (201) zu einem OS-Stapel (301) zum Unterstützen der Ausführung von nativem Code, der in einer Sprache definiert ist, die zum Programmieren eines OS (202) verwendet wird;
- Zuweisen (S502) eines zweiten Teils (2012) des flüchtigen Speichers (201) innerhalb des ersten Teils (2011) zu einem JCVM-Stapel (302) zum Unterstützen eines JCVM-Threads (2031) des JCVM (203); und
- Zuweisen (S503) eines dritten Teils (2013) des flüchtigen Speichers (201) außerhalb des ersten Teils (2011) zu einem Heap (303).

8. Verfahren nach Anspruch 7, das ferner Folgendes umfasst:
Zuweisen (S504) eines vierten Teils (2014) des flüchtigen Speichers (201) außerhalb des ersten Teils (2011) und außerhalb des dritten Teils (2013) zu einem initialisierten Segment (304) zum Speichern globaler Variablen und/oder statischer lokaler Variablen.

9. Verfahren nach Anspruch 7 oder 8, das ferner Folgendes umfasst:
- Bewerten (S701) eines dritten maximalen Speicherverbrauchs des JCVM-Stapels (302) und des OS-Stapels (301), wobei der dritte maximale Speicherverbrauch kumuliert wird, der durch Datenelemente sowohl des JCVM-Stapels (302) als auch des OS-Stapels (301) innerhalb des flüchtigen Speichers (201) zu einem Zeitpunkt verbraucht wird; und
- Bestimmen (S702) einer Größe des ersten Teils (2011) durch Hinzufügen einer Größe eines Puffers zu dem dritten maximalen Speicherverbrauch, wobei die Größe des Puffers größer als 0 ist.

10. Verfahren nach einem der Ansprüche 7 bis 9, wobei eine von einer Startadresse und einer Endadresse des OS-Stapels (301) gleich einer von einer Startadresse und einer Endadresse des ersten Teils (2011) ist, und das Zuweisen (S501) des ersten Teils (2011) zu dem OS-Stapel (301) Folgendes umfasst:
Bestimmen (S5011) der Startadresse des OS-Stapels (301) gemäß einem spezifizierten ersten Wert; und/oder,
Bestimmen (S5012) der Endadresse des OS-Stapels (301) gemäß einem spezifizierten zweiten Wert.

11. Verfahren nach einem der Ansprüche 7 bis 10, wobei eine von einer Startadresse und einer Endadresse des JCVM-Stapels (302) gleich einer von einer Startadresse und einer Endadresse des ersten Teils (2011) ist, und das Zuweisen (S502) des zweiten Teils (2012) zu dem JCVM-Stapel (302) Folgendes umfasst:
Bestimmen (S5021) der Startadresse des JCVM-Stapels (302) gemäß einem spezifizierten dritten Wert; und/oder,
Bestimmen (S5022) der Endadresse des JCVM-Stapels (302) gemäß einem vorgegebenen vierten Wert.

12. Verfahren nach einem der Ansprüche 8 bis 11, wobei das Zuweisen (S503) des dritten Teils (2013) zu dem Heap (303) Folgendes umfasst:
Bestimmen (S5031) einer Startadresse des dritten Teils (2013) gemäß einer Summe einer Startadresse eines benachbarten Teils in dem flüchtigen Speicher (201) und einer Größe des benachbarten Teils.

13. Verfahren nach einem der Ansprüche 7 bis 12, wobei das Zuweisen (S503) des dritten Teils (2013) zu dem Heap (303) Folgendes umfasst:
Bestimmen (S5032) einer Endadresse des dritten Teils (2013) gemäß einer Startadresse eines benachbarten Teils in dem flüchtigen Speicher (201).

14. Verfahren nach einem der Ansprüche 8 bis 13, wobei die Größe des vierten Teils (2014) gemäß Größen der globalen Variablen und/oder statischen lokalen Variablen bestimmt wird, die in dem initialisierten Segment (304) gespeichert sind.

15. Computerlesbares Speichermedium, das eine oder mehrere Anweisungen speichert, die, wenn sie durch einen Prozessor ausgeführt werden, dem Prozessor ermöglichen, das Verfahren nach einem der Ansprüche 7-14 durchzuführen.

## Revendications

1. Dispositif Java Card (20), comprenant :
- une mémoire volatile (201) ;
- un système d'exploitation, OS (202) ; et
- une machine virtuelle Java Card, JCVM (203), comprenant un fil d'exécution JCVM (2031) ;
**caractérisé en ce que** la mémoire volatile (201) comprend :
- une première partie (2011) allouée à une pile OS (301) pour prendre en charge l'exécution de code natif défini dans un langage utilisé pour programmer le système d'exploitation (202) ;
- une deuxième partie (2012) à l'intérieur de la première partie (2011), allouée à une pile JCVM (302) pour prendre en charge le fil d'exécution JCVM (2031) ; et
- une troisième partie (2013) à l'extérieur de la première partie (2011), allouée à un tas mémoire (303).

2. Dispositif Java Card (20) selon la revendication 1, dans lequel la mémoire volatile (201) comprend en outre une quatrième partie (2014) à l'extérieur de la troisième partie (2013) et à l'extérieur de la première partie (2011), allouée à un segment initialisé (304) pour stocker des variables globales et/ou des variables locales statiques.

3. Dispositif Java Card (20) selon la revendication 1 ou la revendication 2, dans lequel
- la première partie (2011) est configurée pour stocker l'ensemble de la pile du système d'exploitation, OS, (301) et l'ensemble de la pile JCVM (302) ;
- la taille de la première partie (2011) est inférieure à la somme d'une première consommation maximale de mémoire de la pile OS (301) et d'une deuxième consommation maximale de mémoire de la pile JCVM (302) ;
- la première consommation maximale de mémoire de la pile OS (301) est la mémoire maximale consommée par des éléments de données de la pile OS (301) dans la mémoire volatile (201) pendant l'exécution du code natif ; et
- la deuxième consommation maximale de mémoire de la pile JCVM (302) est la mémoire maximale consommée par les éléments de données de la pile JCVM (302) dans la mémoire volatile (201) lorsque le fil d'exécution JCVM (2031) s'exécute.

4. Dispositif Java Card (20) selon l'une quelconque des revendications 1 à 3, dans lequel
les adresses occupées par des éléments de données dans la pile JCVM (302) sont configurées pour croître à partir d'une adresse de début (3021) de la pile JCVM (302) vers une adresse de début (3011) de la pile OS (301), à mesure que le nombre d'éléments de données dans la pile JCVM (302) augmente ; et
les adresses occupées par des éléments de données dans la pile OS (301) sont configurées pour croître à partir de l'adresse de début (3011) de la pile OS (301) vers l'adresse de début (3021) de la pile JCVM (302), à mesure que le nombre d'éléments de données dans la pile OS (301) augmente.

5. Dispositif Java Card (20) selon l'une quelconque des revendications 1 à 4, dans lequel un emplacement, par rapport à une extrémité de la première partie (2011), d'une limite entre un élément de données de la pile JCVM (302) et un élément de données adjacent de la pile OS (301) est configuré pour varier de manière dynamique à mesure que le nombre d'éléments de données dans la pile JCVM (302) et le nombre d'éléments de données dans la pile OS (301) varient.

6. Dispositif Java Card (20) selon l'une quelconque des revendications 1 à 5, dans lequel la première partie (2011) et la pile JCVM (302) partagent une même adresse de début ou partagent une même adresse de fin.

7. Procédé de gestion d'une mémoire volatile (201), mis en œuvre par un dispositif Java Card comprenant ladite mémoire volatile, un système d'exploitation, OS (202), et une machine virtuelle Java Card, JCVM (203), **caractérisé en ce que** le procédé comprend les étapes suivantes :
- allouer (S501) une première partie (2011) de la mémoire volatile (201) à une pile OS (301) pour prendre en charge l'exécution d'un code natif défini dans un langage utilisé pour programmer un OS (202) ;
- allouer (S502) une deuxième partie (2012) de la mémoire volatile (201), à l'intérieur de la première partie (2011), à une pile JCVM (302) pour prendre en charge un fil d'exécution JCVM (2031) de ladite JCVM (203) ; et
- allouer (S503) une troisième partie (2013) de la mémoire volatile (201), à l'extérieur de la première partie (2011), à un tas mémoire (303).

8. Procédé selon la revendication 7, comprenant en outre l'étape suivante :
allouer (S504) une quatrième partie (2014) de la mémoire volatile (201), à l'extérieur de la première partie (2011) et à l'extérieur de la troisième partie (2013), à un segment initialisé (304) pour stocker des variables globales et/ou des variables locales statiques.

9. Procédé selon la revendication 7 ou la revendication 8, comprenant en outre les étapes suivantes :
- évaluer (S701) la troisième consommation maximale de mémoire de la pile JCVM (302) et de la pile OS (301), la troisième consommation maximale de mémoire étant la consommation maximale cumulée de mémoire consommée par à la fois les éléments de données de la pile JCVM (302) et de la pile OS (301) dans la mémoire volatile (201) à un moment donné ; et
- déterminer (S702) la taille de la première partie (2011) en ajoutant la taille d'un tampon à la troisième consommation maximale de mémoire, la taille du tampon étant supérieure à 0.

10. Procédé selon l'une quelconque des revendications 7 à 9, dans lequel l'une d'une adresse de début et d'une adresse de fin de la pile OS (301) est égale à l'une d'une adresse de début et d'une adresse de fin de la première partie (2011), et l'allocation (S501) de la première partie (2011) à la pile OS (301) comprend les étapes suivantes :
déterminer (S5011) l'adresse de début de la pile OS (301) selon une première valeur spécifiée ; et/ou déterminer (S5012) l'adresse de fin de la pile OS (301) selon une deuxième valeur spécifiée.

11. Procédé selon l'une quelconque des revendications 7 à 10, dans lequel l'une d'une adresse de début et d'une adresse de fin de la pile JCVM (302) est égale à l'une d'une adresse de début et d'une adresse de fin de la première partie (2011), et l'allocation (S502) de la deuxième partie (2012) à la pile JCVM (302) comprend les étapes suivantes :
déterminer (S5021) l'adresse de début de la pile JCVM (302) selon une troisième valeur spécifiée ; et/ou déterminer (S5022) l'adresse de fin de la pile JCVM (302) selon une quatrième valeur spécifiée.

12. Procédé selon l'une quelconque des revendications 8 à 11, dans lequel l'allocation (S503) de la troisième partie (2013) au tas mémoire (303) comprend l'étape suivante :
déterminer (S5031) une adresse de début de la troisième partie (2013) en fonction de la somme d'une adresse de début d'une partie adjacente dans la mémoire volatile (201) et de la taille de la partie adjacente.

13. Procédé selon l'une quelconque des revendications 7 à 12, dans lequel l'allocation (S503) de la troisième partie (2013) au tas mémoire (303) comprend l'étape suivante :
déterminer (S5032) une adresse de fin de la troisième partie (2013) en fonction de l'adresse de début d'une partie adjacente dans la mémoire volatile (201).

14. Procédé selon l'une quelconque des revendications 8 à 13, dans lequel la taille de la quatrième partie (2014) est déterminée en fonction des tailles des variables globales et/ou des variables locales statiques stockées dans le segment initialisé (304).

15. Support de stockage lisible par ordinateur, stockant une ou plusieurs instructions qui, lorsqu'elles sont exécutées par un processeur, permettent au processeur d'exécuter le procédé selon l'une quelconque des revendications 7 à 14.
